# EUROPEAN PATENT SPECIFICATION

(11) **EP 3 584 995 B1**
(45) Date of publication and mention of the grant of the patent: **16.02.2022**
(21) Application number: 17905675.9
(22) Date of filing: 14.04.2017
(51) Int. Cl.: H04L 12/14, H04W 4/24, H04W 28/18, H04L 12/24

(54) **SYSTEM FOR IMPLEMENTING POLICY CONTROL**
SYSTEM ZUR HERSTELLUNG VON POLITIKKONTROLLE
SYSTÈME PERMETTANT DE METTRE EN OEUVRE UN CONTRÔLE DE POLITIQUE

(43) Date of publication of application: 25.12.2019
(73) Proprietor: Huawei Technologies Co., Ltd., Longgang District Shenzhen, Guangdong 518129 (CN)
(72) Inventor: HU, Xiang, Shenzhen Guangdong 518129 (CN); XIA, Yuan, Shenzhen Guangdong 518129 (CN); CHEN, Zhongping, Shenzhen Guangdong 518129 (CN); ZHOU, Han, Shenzhen Guangdong 518129 (CN); ZHU, Quan, Shenzhen Guangdong 518129 (CN)
(74) Representative: Pfenning, Meinig & Partner mbB
(86) International application number: PCT/CN2017/080636
(87) International publication number: WO 2018/188082

(56) References cited:
- CN-A- 101 068 148
- CN-A- 102 958 029
- CN-A- 104 010 332
- US-A1- 2011 289 196
- "3rd Generation Partnership Project; Technical Specification Group Services and System Aspects; Study on the security aspects of the next generation system (Release 14)", 3GPP STANDARD ; TECHNICAL REPORT ; 3GPP TR 33.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V1.1.0, 13 April 2017 (2017-04-13), pages 1-491, XP051298122, [retrieved on 2017-04-13]
- CHINA UNICOM ET AL: "Service definition proposal", 3GPP DRAFT; S2-170322 SERVICE DESCRIPTION PROPOSAL -DP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Spokane, US; 20170116 - 20170120 16 January 2017 (2017-01-16), XP051216508, Retrieved from the Internet: URL:http://www.3gpp.org/ftp/Meetings_3GPP_ SYNC/SA2/Docs/ [retrieved on 2017-01-16]

## Description

### TECHNICAL FIELD

The present invention relates to the field of communications technologies, and in particular, to a system for implementing policy control.

### BACKGROUND

In a current 2G, 3G, or 4G network architecture, a gateway device such as a GGSN (Gateway GPRS Support Node, GPRS gateway), an SGW (Serving Gateway, serving gateway), or a PGW (Packet Data Network Gateway, packet data network gateway) in a packet core network detects a service data flow based on a service awareness and parsing capability of the gateway device, obtains, from a policy control function entity such as a PCRF (Policy and Charging Rules Function, policy and charging rules function) or an AAA (Authentication, Authorization, and Accounting, authentication, authorization, and accounting) server, a policy to which a user subscribes, or performs policy matching according to a policy locally configured by the gateway, and then performs corresponding policy control such as QoS control, bandwidth management, or charging management based on an action defined in a matching rule. In a 4.5G network architecture and a future 5G network architecture, a control plane and a user plane may be separately deployed on a network element or a function entity in the packet core network, but a policy control procedure does not greatly change.

With development of mobile broadband network technologies, a large quantity of new mobile broadband-based OTT (Over The Top) applications and services emerge, and requirements for controlling and charging an OTT service based on a DPI (Deep packet inspection, deep packet inspection) service awareness capability in a mobile broadband network gradually increase. However, the gateway can obtain, from the policy control function entity such as the PCRF or the AAA, only a service policy to which the user subscribes with the core network. To implement awareness and identification of an OTT service, an SP (Service Provider, service provider)/a CP (Content Provider, content provider) needs to participate. For example, the SP or the CP synchronizes subscription data (including OTT service data such as an OTT service access URL or a server address and user data such as data about whether the user subscribes to the OTT service) between the user and the SP/CP to the core network. Alternatively, the SP or the CP autonomously provides a policy control server, so that the gateway queries the policy control server when the user accesses the OTT service. Regardless of a specific manner, the direct or frequent exchange between the SP or the CP and the core network may bring a risk in network security and service data security. In addition, performance overheads, data synchronization, deployment costs, and the like encounter specific problems. Therefore, it is difficult for an operator to implement dynamic identification and policy control on the OTT service. In addition, due to popularization of an encryption service such as HTTPS, after service flow data between a terminal and an SP server or a CP server is encrypted, it is difficult for a policy execution entity to perform accurate identification and policy control on a service based on a service awareness or parsing capability of the policy execution entity.

Document "3rd Generation Partnership Project; Technical Specification Group Services and System Aspects; Study on the security aspects of the next generation system (Release 14)", 3GPP STANDARD ; TECHNICAL REPORT ; 3GPP TR 33.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20170413), vol. SA WG3, no. V1.1.0, pages 1 - 491, XP051298122 studies security aspects of the next generation system.

Document CHINA UNICOM ET AL, "Service definition proposal", vol. SA WG2, no. Spokane, US; 20170116 - 20170120, (20170116), 3GPP DRAFT; S2-170322 SERVICE DESCRIPTION PROPOSAL -DP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/SA2/Docs/, (20170116), XP051216508 proposes a principle to describe services in 5G service based architecture.

Therefore, a solution is required, so that when a security risk and performance pressure of the core network do not increase, an OTT service policy is dynamically installed in the core network without being affected by service data encryption, thereby meeting a requirement for rapidly deploying a new service.

### SUMMARY

The above problems are solved by the subject-matter according to the independent claim. Embodiments of the present invention according to the claims provide a communication system, to implement awareness and corresponding policy control of a core network on a user access service.

### BRIEF DESCRIPTION OF DRAWINGS

FIG. 1 is a possible schematic diagram of a system architecture according to an embodiment of the present invention;
FIG. 2 is a possible schematic diagram of a solution conception according to an embodiment of the present invention;
FIG. 3 is a possible schematic diagram of a core network architecture according to an embodiment of the present invention;
FIG. 4 is another possible schematic diagram of a core network architecture according to an embodiment of the present invention;
FIG. 5 is a possible schematic diagram of a function module of user equipment according to an embodiment of the present invention;
FIG. 6 is another possible schematic diagram of a function module of user equipment according to an embodiment of the present invention;
FIG. 7 is a possible schematic diagram of a mapping between a function module and a hardware module of user equipment according to an embodiment of the present invention;
FIG. 8 is a possible schematic diagram of a function module of an application server according to an embodiment of the present invention;
FIG. 9A and FIG. 9B are a possible schematic flowchart of a method for pushing a service policy by user equipment by using a user plane according to an embodiment of the present invention;
FIG. 10a is a possible schematic structural diagram of a data packet sent by user equipment according to an embodiment of the present invention;
FIG. 10b is a possible schematic structural diagram of a data packet received by a user plane function entity according to an embodiment of the present invention;
FIG. 11A and FIG. 11B are a possible schematic flowchart of a method for pushing a service policy by user equipment by using a control plane;
FIG. 12A and FIG. 12B are another possible schematic flowchart of a method for pushing a service policy by user equipment by using a user plane ; and
FIG. 13 is a possible schematic diagram of a computer device according to an embodiment of the present invention.

### DESCRIPTION OF EMBODIMENTS

The following describes the technical solutions in the embodiments of the present invention with reference to the accompanying drawings in the embodiments of the present invention.

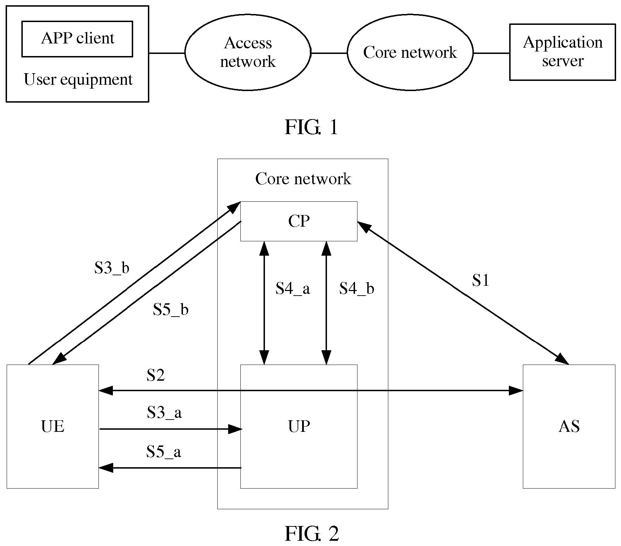

FIG. 1 is a schematic diagram of a system architecture on which an embodiment of the present invention is based. As shown in FIG. 1, an APP (application, application) client is installed on user equipment. A user accesses an application server (AS, application server) by using the APP client, to use or enjoy a service provided by the application server. A service flow between the APP client and the AS is forwarded through an access network and a core network. In this embodiment of the present invention, both the access network and the core network belong to communications networks. Network elements, function entities, or devices in the access network and the core network may be provided by a same communications network operator or different communications network operators. This is not limited in the present invention. In this embodiment of the present invention, a communications network operator is sometimes referred to as an operator for short. Types of the user equipment, the access network, and the core network are not limited in the present invention. The user equipment (UE, User Equipment) may be a mobile phone, a computer, a wearable device, an in-vehicle device, or another terminal device having a communication function. The APP client may be an independent client provided by a provider of the AS accessed by the user (for example, the user accesses a Taobao server by using a Taobao client on a mobile phone), or may be a web browser client (for example, the user logs, by using an IE explorer, in to a website that provides an OTT service). The access network may be a radio access network such as a GERAN (GSM EDGE Radio Access Network), a UTRAN (Universal Terrestrial Radio Access Network), or an E-UTRAN (Evolved UTRAN), a fixed access network, or another access network. The core network may be a GPRS (General Packet Radio Service) packet switched network, an EPC (Evolved Packet Core, evolved packet core) network, a subsequent evolved network of the EPC network, a future 5G (5th Generation) network, or another network. A device in the core network controls or transmits a service flow or a data packet between the user equipment and the AS according to a specified policy such as QoS, charging, routing, or redirection. The AS is provided by an SP/a CP, is connected to the core network, and provides an audio service/a video service, a media service, and a social service, for example, some OTT-type services or applications such as Tencent Video and network audio/video telephony for the user by virtue of capabilities such as user access control, routing, addressing, and data transmission of the access network and the core network.

With development of mobile broadband network technologies, a large quantity of new mobile broadband-based OTT (Over The Top) applications and services emerge, the SP/CP provides more types of services or applications, and a service innovation speed is faster. However, a core network device encounters many problems when detecting a service flow. For example, IP addresses of service flows are various, frequently change, and cannot be converged, and a policy execution entity cannot obtain complete and accurate IP address features of the service flows in a timely manner. A large quantity of encryption algorithms are applied to the service flows, more services are carried by using HTTPS (Hyper Text Transfer Protocol over Secure Socket Layer, HTTP over secure socket layer), an AS service accessed by the user is equivalent to a black box for the core network due to service flow encryption, and a DPI capability of the core network device is greatly challenged.

To resolve the foregoing problems and better implement awareness and corresponding policy control on a user access service, an embodiment of the present invention provides a technical solution of service policy exposure, to implement dynamic service policy control. The service policy exposure provided in this embodiment of the present invention may be understood as a solution of operator capability exposure. Conventional operator capability exposure means that an operator provides a service capability (such as a voice, an SMS message, or a conference) of an operator network for a third party by using an API (Application Programming Interface, application programming interface) or another form of open interface, so that the third party can invoke the service capability of the operator network through the open interface to provide richer service experience. For example, an IoT service provider may provide services such as smart household, intelligent security protection, and remote care based on a communication capability of the operator network. In the technical solution provided in this embodiment of the present invention, to enable a core network device to more accurately perform detection and policy control on a service flow of a user, an operator uses a service policy definition capability as a new service capability, exposes the service policy definition capability to an SP/a CP providing a service, and authorizes the SP/CP with the service policy definition capability, and then the SP/CP authorizes the user with the service policy definition capability. User equipment pushes a service policy to a core network, so that the core network device performs policy control such as charging, QoS, routing, gating control, or redirection on a service flow or a data packet between the user equipment and an AS according to the service policy. In the solution of the service policy exposure provided in this embodiment of the present invention, the operator uses the service policy definition capability as a service capability, and exposes the service policy definition capability to the SP/CP, and then the SP/CP authorizes an authorized user of the SP/CP with the service policy definition capability, so that the user defines a service policy within an authorization range of the operator.

Based on the foregoing solution conception, the solution in this embodiment of the present invention is further described by using a 5G core network architecture as an example in FIG. 2. In FIG. 2, an access manner in which UE accesses a 5G core network is not limited, and the UE may access the 5G core network through Wi-Fi or a 5G access network, or in another access manner. In the 5G core network, a core network device, a network element, or a function entity is divided into a control plane (Control plane, CP) function entity and a user plane (User plane, UP) function entity. The control plane function entity implements functions such as mobility management, session management, policy control, and network capability exposure. The user plane function entity forwards a service flow or a data packet of a user, and performs policy control such as QoS, charging, routing, or redirection on the service flow or the data packet according to a policy. The solution provided in this embodiment of the present invention includes the following steps.

S1. The AS subscribes to (or may "subscribe to", "register", or the like, which is not limited in this embodiment of the present invention) a service policy with the core network.

The AS subscribes to the service policy with the core network by using an external open interface provided by the core network. For example, the core network externally presents, in a form of a website, a service policy that can be supported, and an AS provider may select, from a service policy list provided by a core network operator, the service policy that needs to be subscribed to. For another example, the AS may first query, by using an external open API interface of a NEF (Network Exposure Function, network exposure function), for a service policy supported by the core network, and then select some service policies for subscription. Alternatively, the AS may directly subscribe, with the core network by using an API interface of a NEF, to the service policy that the AS expects to use, and the core network determines whether the service policy required by the AS can be supported. Subscription modes are various. This is not limited in the present invention. In FIG. 2, it is assumed that a core network control plane CP includes a network element or a function entity that provides a network exposure function, and a network element or a function entity that provides a service policy control or authorization function. The AS sends a service policy subscription message to the CP. Based on a policy control capability category that can be provided by the core network, and possible information such as a service type of a service provided by the AS and an attribute of the AS (for example, a level or a credit limit of the AS provider), the CP determines, in the service policy to be subscribed to by the AS, a service policy that can be used by the service provided by the AS, and authorizes the service provided by the AS to use the service policy. In step S1, the AS obtains the service policy authorized by the core network. To identify, in the core network, a service policy to which an AS subscribes, the core network may further allocate, to the service policy authorized to the AS, indication information used to indicate the service policy, for example, a service policy identifier. Alternatively, the service policy identifier may be autonomously allocated by the AS according to a coding rule obtained through negotiation with the core network, and is sent by the AS to the CP by using a request message for subscribing to a service package. It should be noted that the AS may subscribe to one service policy or a plurality of service policies, such as charging, routing, redirection, and QoS. Correspondingly, the service policy identifier may identify one service policy or a set of a plurality of service policies. It should be noted that, in this embodiment of the present invention, through introduction of the service policy identifier, the core network can identify service policies to which different ASs subscribe, and can further identify different sets of service policies to which a same AS subscribes. For example, the same AS subscribes to two charging policies, and separately authorizes different levels of users to use the charging policies. In this case, the core network allocates a service policy identifier to each of the two charging policies to which the AS subscribes. It should be noted that the "service policy identifier" is only a name, and the name constitutes no limitation to this solution. For example, during specific implementation, the "service policy identifier" may be alternatively referred to as a "service identifier", a "policy identifier", or an "identifier". The name is not limited in the present invention.

S2. The AS authorizes the UE to use the service policy.

The user logs in to or accesses the AS by using the UE (specifically, an APP client on the UE). The AS sends, to the UE based on information such as a service accessed by the UE and an attribute of the UE (such as a priority, a user type, prepayment, or postpayment), at least one of a service policy that can be used by the UE to access the service and a service policy identifier, in other words, sends, to the UE, information about the service policy that the AS authorizes the user to use. It should be noted that a server that performs authentication and authorization on the user may be different from a server to which the user initially logs in. For example, the SP/CP may deploy a unified portal server. After receiving a login request message of the UE, the portal server forwards the login request of the user to a user data server for authentication or authorization. In addition, a server that stores user data and service subscription data may also be different from the server that performs authentication and authorization on the user. In this embodiment of the present invention, names of forwarding servers between SP/CP servers are not limited, and are collectively ASs. It should be noted that the AS may authorize, in another manner, the UE to use the service policy. For example, a service policy identifier and a service policy identifier authorization rule are preset in the APP client. The APP client locally determines an attribute of the user, and selects a service policy identifier for the user according to the preset rule.

S3. The UE pushes the service policy to the core network. The UE may choose to use a user plane or a signaling plane to push the service policy to the core network.

It should be noted that the AS may subscribe to a plurality of service policies, and the AS may authorize the user with a plurality of service policies. The UE may select only some service packages or policies to push the service packages or policies to the core network. These pushed service packages or policies may be service policies selected by the user through UI (User Interface) interaction in the APP client on the UE, or may be to-be-used service policies selected according to a rule preset or configured in the APP client.

S3_a. The UE pushes the service policy by using the user plane. The UE encapsulates at least one of the service policy authorized by the AS and the service policy identifier into a service flow or a data packet, and sends the service flow or the data packet to a user plane device in the core network by using user plane data. To enable the user plane device in the core network of the operator to be aware of the service flow, the data packet, or the service flow for pushing the service policy, the UE may add an indication to the service flow (for example, newly add a service policy push indication to an IP header, a UDP header, a TCP header, or an HTTP header of the service flow). The user plane device in the core network detects the service flow, and processes, according to a method in S4_a, the service flow including the indication. Alternatively, the UE may fill in a destination address of the service flow, the data packet, or the service flow with a policy configuration address of a UPF. The service flow sent to the policy configuration address is used by the UPF as a service policy configuration message, and is parsed and processed according to the method in step S4_a. The policy configuration address may be sent by the core network operator to an OTT server in step S1 by using a service policy subscription procedure. Then, the OTT server delivers the policy configuration address to the UE in step S2. Alternatively, a network element or a function entity in the core network may deliver the policy configuration address to the UE through signaling. Alternatively, the UPF may send the policy configuration address to the UE on the user plane in a process in which the UE establishes a connection to the AS. Certainly, in the process in which the UE establishes the connection to the AS, the UPF may use an address of the UPF as an address of the AS, and send the address to the UE. The UPF actually serves as a proxy between the UE and the AS, and parses and forwards the service flow and the service flow or the data packet between the UE and the AS. To enable the UPF to distinguish the service flow or the data packet for pushing the service policy from a service flow or a data packet for accessing an AS service, the UE may encapsulate the service flow or the data packet for pushing the service policy and the service flow or the data packet for accessing the AS service into different formats (for example, the service flow or the data packet between the UE and the AS is encapsulated into an HTTPS format, and the service flow or the data packet for pushing the service policy by the UE is encapsulated into a SIP format) for distinguishing by the UPF. Alternatively, the UE may enable, by using a specific message type or an indication of another type, the UPF to identify the service flow or the data packet for pushing the service policy.

S3_b. The UE pushes the service policy by using the control plane. The UE encapsulates at least one of the service policy authorized by the AS and the service policy identifier into a control plane message such as a NAS (Non-Access-Stratum, non-access stratum) message, and pushes the service policy to a control plane network element or function entity in the core network. A message name and a message format of the control plane message for pushing the service policy are not limited in the present invention.

S4. The core network receives the service policy pushed by the UE. Corresponding to the two manners of pushing the service policy by the UE, the core network also has two different processing manners.

S4_a. A user plane network element or function entity receives the user plane data for pushing the service policy by the UE, and sends at least one of the service policy pushed by the UE and the service policy identifier to a control plane network element or function entity, and the control plane network element or function entity checks the service policy pushed by the UE. A check action includes determining whether the service policy pushed by the UE is a service policy supported by the core network. After the check succeeds, the control plane instructs the user plane to execute the service policy pushed by the UE.

S4_b. The control plane network element or function entity receives the control plane message for pushing the service policy by the UE, and checks the service policy pushed by the UE. A check action includes determining whether the service policy pushed by the UE is a service policy supported by the core network. After the check succeeds, the control plane instructs the user plane to execute the service policy pushed by the user.

It should be noted that the check performed by the core network on the service policy identifier is an optional action, and an objective is to improve reliability and security of the solution in this embodiment of the present invention. The check action performed by the control plane in the core network on the service policy pushed by the UE may further include determining whether the service policy pushed by the UE is a service policy to which the service provided by the AS subscribes. In this case, the UE further needs to add identifier information of the AS service to be accessed by the UE to the user plane service flow or data packet or the control plane message for pushing the service policy, so that the core network determines whether the service policy pushed by the UE is a service policy to which the AS subscribes. In a possible implementation solution, an identifier of the AS service may be used as separate identifier information. The identifier is an identifier that can be used by the core network to uniquely identify the AS service, is allocated by the core network or the AS to the AS service, and is sent by the AS to the UE in step S2. In another possible implementation solution, the identifier information of the AS service may be reflected in the service policy identifier according to a specific coding rule. For example, when the coding rule of the service policy identifier is "core network operator coding + AS provider coding + AS service coding + authorized service policy coding", both the identifier information of the AS service and information indicating that the AS service is authorized with the service policy may be reflected in the service policy coding. Certainly, according to another coding rule, the service policy identifier may uniquely identify, in the core network, a service policy to which an AS subscribes. Another possible coding manner is not excluded in this embodiment of the present invention, and is not limited.

In addition, the core network further needs to allocate a label or a feature field to the UE, so that the UE adds the label or the feature field to the user plane service flow or data packet for subsequently accessing the service provided by the AS, to indicate the user plane function entity or network element that the service flow or the data packet needs to use the service policy pushed by the UE. The label or the feature field is allocated by the control plane, and is sent by the user plane or control plane function entity or network element to the UE in a response message that is sent to the UE and that is for pushing the service policy.

S5. The core network returns the response message to the UE and executes the service policy.

S5_a/S5_b. In different manners of pushing the service policy by the UE, the user plane or control plane function entity or network element returns, to the UE, the response message for pushing the service policy. The response message includes the label or the feature field corresponding to the service policy. If the UE subsequently adds the label or the feature field to the service flow or the data packet for accessing the service provided by the AS, the user plane function entity or network element executes the corresponding service policy on the service flow or the data packet including the label or the feature field.

Based on the schematic diagram of the application scenario shown in FIG. 1 and the schematic diagram of the technical solution conception of the embodiment of the present invention in FIG. 2, FIG. 3 and FIG. 4 further provide schematic diagrams of network architectures for implementing the technical solution conception of the present invention in two different network types.

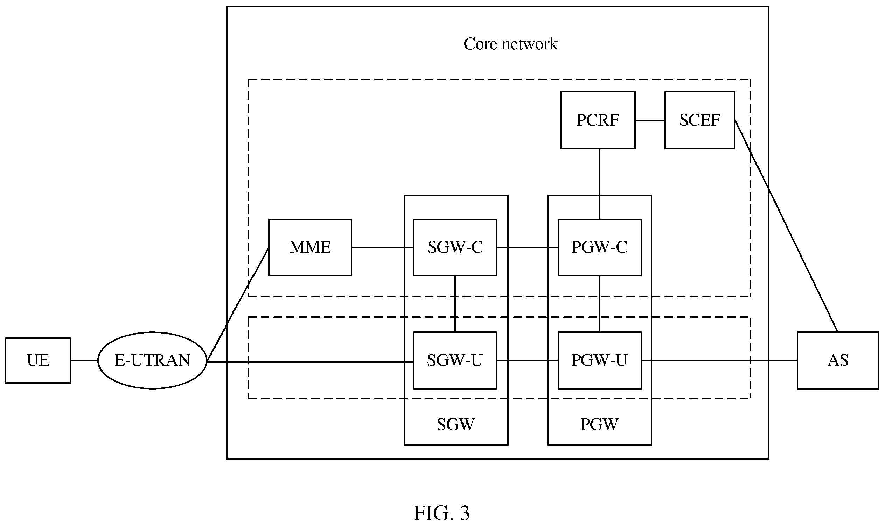

An E-UTRAN in FIG. 3 is an instance of the access network in FIG. 1. Correspondingly, the core network in FIG. 1 is instantiated as an EPC network in FIG. 3, and includes function entities or network elements such as an MME (Mobility Management Entity, mobility management entity), a PCRF, an SGW (Serving Gateway, serving gateway), a PGW (Packet Data Network Gateway, packet data network gateway), and an SCEF (Service Capability Exposure Function, service capability exposure function). The MME is responsible for mobility management and connection management of UE, and selects gateways such as an SGW and a PGW for the UE. The SGW is connected to the E-UTRAN access network, and the PGW is connected to an AS. The PGW undertakes a function of a policy execution entity in the EPC network, detects a service flow according to a charging and control policy indicated by the PCRF, and executes a control policy that matches the service flow. As an external capability exposure interface of the core network, the SCEF is connected to the AS. The AS subscribes to a service policy with the core network by using the SCEF. The PCRF manages a service policy to which a user and the AS subscribe. In actual deployment, the SGW and the PGW may be deployed in a combined manner. In other words, a same gateway supports both a function of the SGW and a function of the PGW. The SGW or the PGW may further separate a control plane function from a user plane function. A PGW-C (Control Plane, control plane) is responsible for interacting with the PCRF to obtain the charging and control policy of the user, and pushing the policy to a PGW-U (User Plane, user plane). The PGW-U is responsible for service flow detection, policy matching, and policy execution. For ease of comparison with FIG. 2, in FIG. 3, CP and UP division is performed on network elements in the core network by using dashed-line boxes. It should be noted that the division is merely an example. In this embodiment of the present invention, there is no limitation to separation and division between a control plane and a user plane of the EPC network. In this embodiment of the present invention, when the UE accesses a service provided by the AS, if the UE is authorized by the AS, the UE pushes the service policy to the PGW-U by using the user plane, or pushes the service policy to the PGW-C by using a network element such as the MME or an SGW-C. After a function entity or a network element such as the PGW-C or the PCRF checks the service policy pushed by the UE, the PGW-U executes the service policy pushed by the UE, and performs corresponding policy control on the service flow between the UE and the AS.

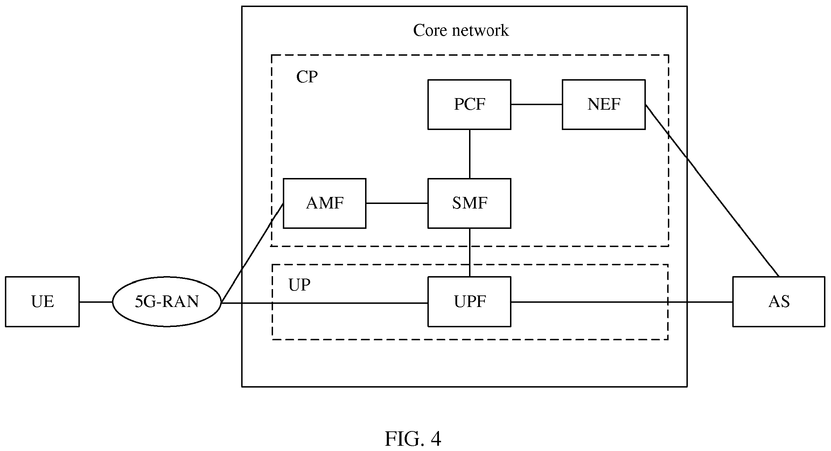

FIG. 4 is a schematic diagram of a network architecture of the technical solution in the embodiment of the present invention in a 5G architecture. It should be noted that, because an architecture of a 5G core network is not formally determined on the application date of the present invention, a name and a deployment form of a network entity in the 5G core network in this embodiment of the present invention are merely examples, and constitute no limitation to the technical solution and a related function entity in the present invention. The 5G core network in FIG. 4 includes a control plane function entity and a user plane function entity. The CP function entity includes an AMF (Access and Mobility Management Function, access and mobility management function), an SMF (Session Management Function, session management function), a PCF (Policy Control Function, policy control function), and a NEF. The UP function entity is a UPF (User Plane Function). The AMF is responsible for mobility management and access management of UE. The SMF is responsible for session management. The UE is attached to the core network by using the AMF and the SMF. The UPF controls and forwards a service flow or a data packet between the UE and an AS. The NEF serves as an external open interface of the core network. The AS subscribes to a service policy with the core network by using the NEF. The PCF is responsible for management of the service policy to which the AS subscribes. In this embodiment of the present invention, when the UE accesses a service provided by the AS, if the UE is authorized by the AS, the UE pushes the service policy to the UPF by using a user plane, or pushes the service policy to the SMF by using a network element such as the AMF. After the control plane function entity such as the SMF or the PCF checks the service policy pushed by the UE, the UPF executes the service policy pushed by the UE, and performs corresponding policy control on the service flow between the UE and the AS.

FIG. 3 and FIG. 4 are examples of two network architectures of the technical solution in the present invention. A person skilled in the art can design an implementation solution applicable to another type of network based on content in the embodiments of the present invention.

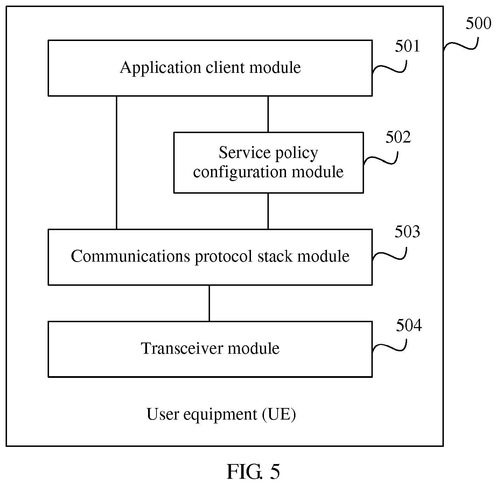

FIG. 5 is a possible schematic diagram of a function structure of UE according to an embodiment of the present invention. UE 500 includes an application client module 501, a service policy configuration module 502, a communications protocol stack module 503, and a communications module 504. FIG. 2 is used as an example to describe the function modules. In step S2, the application client module 501 (such as APP client software installed on a mobile phone) constructs an application layer message (such as a login or service access request message) to be sent to an application server. The communications protocol stack module 503 encapsulates the application layer message into a packet or a message (for example, a transport layer or network layer message header or packet header is encapsulated at an outer layer of the application layer message constructed by the application client module 501, or message and packet splitting or recombination is performed according to a transport protocol) that can be transmitted in a core network. The communications module sends the packet or the message to the core network. Finally, the core network forwards the packet or the message to the application server AS. Likewise, the communications module 504 receives a message (for example, a service policy authorization message) sent by the AS to the application client module. After performing parsing according to network layer and transport layer protocols, the communications protocol stack module 503 sends the application layer message to the application client module 501. The service policy configuration module 502 is a function module responsible for pushing a service policy to the core network in this embodiment of the present invention. After obtaining, in step S2, the service policy authorized by the AS, the application client module 501 invokes the service policy configuration module 502, to push the service policy to the core network by using a control plane or a user plane. The service policy configuration module 502 constructs control plane or user plane data for pushing the service policy, then the communications protocol stack module 503 encapsulates the control plane or user plane data, and the communications module 504 sends the control plane or user plane data to the core network. The communications module 504 receives a response message sent by the core network to the UE in step S5. The communications protocol stack module 503 parses the response message, and sends the response message to the service policy configuration module 502. The service policy configuration module 502 sends, to the application client module 501, a received label or feature field returned by the core network. Subsequently, the application client module 501 adds the label or the feature field to an outer layer of a message payload of the sent application layer message. The core network detects and parses a service flow or a data packet sent by the UE to the AS, and performs policy control on the service flow or the data packet including the label and the feature field.

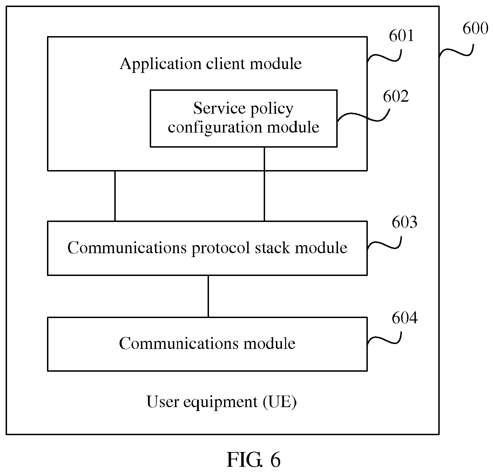

FIG. 6 is another possible schematic diagram of a function structure of UE according to an embodiment of the present invention. Modules included in UE 600 are the same as the function modules included in the UE 500 in FIG. 5. An application client module 601, a service policy configuration module 602, a communications protocol stack module 603, and a communications module 604 in FIG. 6 separately correspond to the application client module 501, the service policy configuration module 502, the communications protocol stack module 503, and the communications module 504 in FIG. 5. A difference lies in that the service policy configuration module 602 is an internal module of the application client module 601. In other words, the application client module 601 includes a function of the service policy configuration module 602. For example, in a possible product form corresponding to FIG. 5, software and hardware of a mobile phone support a function of the service policy configuration module 502 during delivery. An SP/a CP needs to implement only a function of the application client module 501 when developing an APP client. For another example, in a possible product form corresponding to FIG. 6, software and hardware of a mobile phone do not support the function of the service policy configuration module 602 during delivery. When an SP/a CP develops an APP client, the APP client needs to support a function of the application client module 601 including the service policy configuration module 602.

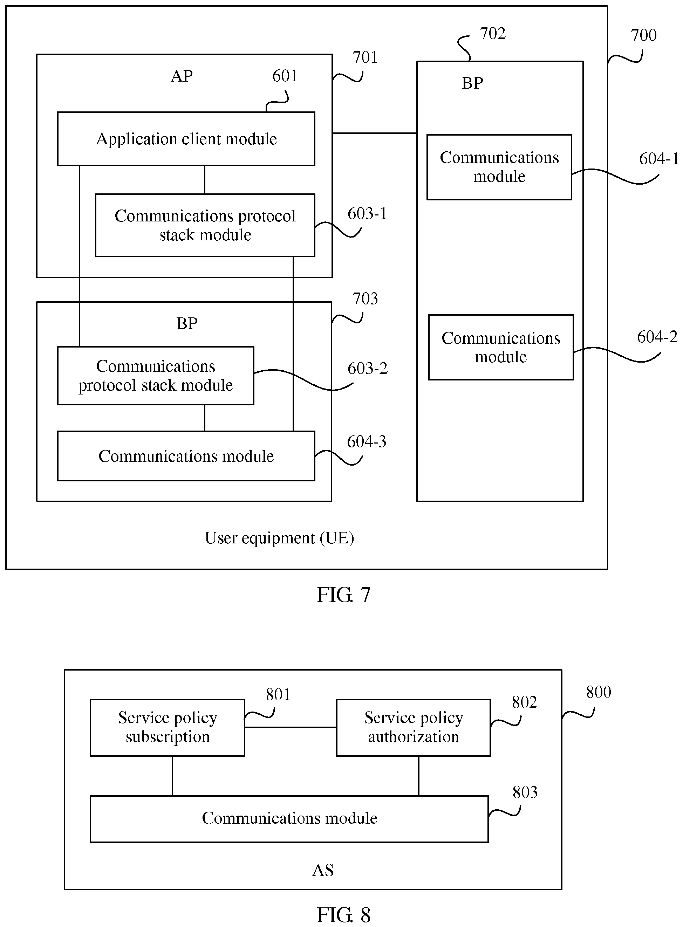

FIG. 5 and FIG. 6 are structural diagrams of logical function modules of UE. In an actual UE product, each module shown in FIG. 5 or FIG. 6 may exist in various forms, and may be implemented by using hardware, may be implemented by using software, or may be implemented by using any combination thereof. Based on the logical function modules in FIG. 6, FIG. 7 is a possible diagram of a mapping from the logical function modules in FIG. 6 to physical components of UE. UE 700 includes one AP (Application Processer, application processor) and two BPs (Baseband Processer, baseband processor or baseband chip). The AP communicates with the BP by using an AT command (command). A person skilled in the art may understand that the UE may further include another physical component such as a display, an antenna, or a network port. The another physical component is not limited in this embodiment of the present invention, and is not listed one by one in FIG. 7. An AP 701 runs a Linux operating system and an application program, and the AP 701 includes an application client module 601 and a communications protocol stack module 603-1. The communications protocol stack module 603-1 provides a function of an IP protocol stack and a function of an HTTP/HTTPS protocol stack. A BP 702 includes two communications modules 604-1 and 604-2, respectively providing a Wi-Fi transceiver function and a Bluetooth transceiver function. A BP 703 includes a communications protocol stack module 603-2 and a communications module 604-3. The communications protocol stack module 603-2 provides a function of a SIP (Session Initiation Protocol, session initiation protocol) protocol stack and a function of a NAS (Non-Access-Statum, non-access stratum) protocol stack. The communications module 604-3 provides wireless transceiver functions such as 2G, 3G, 4G, and 5G. The following describes a relationship among the modules in FIG. 7 by using an example in which the UE sends a message to the core network in FIG. 2. In step S2, the communications protocol stack module 603-2 in the BP 703 first initiates a procedure in which the UE is attached to the core network. Then, the application client module 601 constructs an application layer message (such as a request message for logging in to or accessing an AS service). The communications protocol stack module 603-1 encapsulates the application layer message into an HTTPS message. Then, the communications module in the BP 703 is invoked by using an AT command, to send the message to the core network. In step S3, the UE needs to push a service policy to the UP of the core network. The application client module 601 invokes a SIP protocol stack capability of the communications protocol stack module 603-2 to encapsulate a message for pushing the service policy into a SIP format, and pushes the service policy to the user plane of the core network by using the communications module 604-3. In step S3, the UE needs to push a service policy to the CP of the core network. The application client module 601 invokes a NAS protocol stack capability of the communications protocol stack module 603-2 to encapsulate a message for pushing the service policy into a NAS message, and pushes the service policy to the control plane of the core network by using the communications module 604-3. The foregoing describes the relationship among the modules by using an example in which the UE accesses the 5G core network by using a 5G-RAN in FIG. 2. Certainly, the UE may alternatively access the 5G core network in another wireless manner such as Wi-Fi or a wired manner. In this case, communication messages constructed by the communications protocol stack modules 603-1 and 603-2 need to be sent by using the communications module in the BP 702 or another wired communications module.

It should be noted that, in the function modules of the UE shown in FIG. 5 to FIG. 7, the function modules may be further combined or divided. For example, the application client module may further have a function of the communications protocol stack module. To be specific, the application client module may encapsulate and parse an application layer message according to a protocol between the UE and a communications network. In this case, the communications protocol stack module in FIG. 5 to FIG. 7 is an internal function module of the application client module.

In the embodiments of the present invention, function modules may be further divided for the AS. For example, each function module may be divided according to each function, or two or more functions may be integrated into one module. The integrated module may be implemented in a form of hardware, or may be implemented in a form of a software function module. It should be noted that, in the embodiments of the present invention, module division is an example, and is merely logical function division. In actual implementation, there may be another division manner.

For example, FIG. 8 is a possible schematic structural diagram of an AS in the foregoing embodiment. The device 800 includes a service policy subscription module 801, a service policy authorization module 802, and a communications module 803. The service policy subscription module 801 interacts with a core network by using the communications module 803, and subscribes to a service policy with the core network, in other words, implements a function of the AS in step S1 in FIG. 2. The service policy authorization module 802 interacts with UE by using the communications module 803, performs authentication and service policy authorization on a user, and sends, to the UE, the service policy to which the AS has subscribed, in other words, implements a function of the AS in step S2 in FIG. 2.

The foregoing describes the technical solution in the present invention, the core network architecture to which the technical solution is applicable, and functions of the UE and the AS. The following further describes a procedure of the technical solution in the embodiments of the present invention with reference to more accompanying drawings.

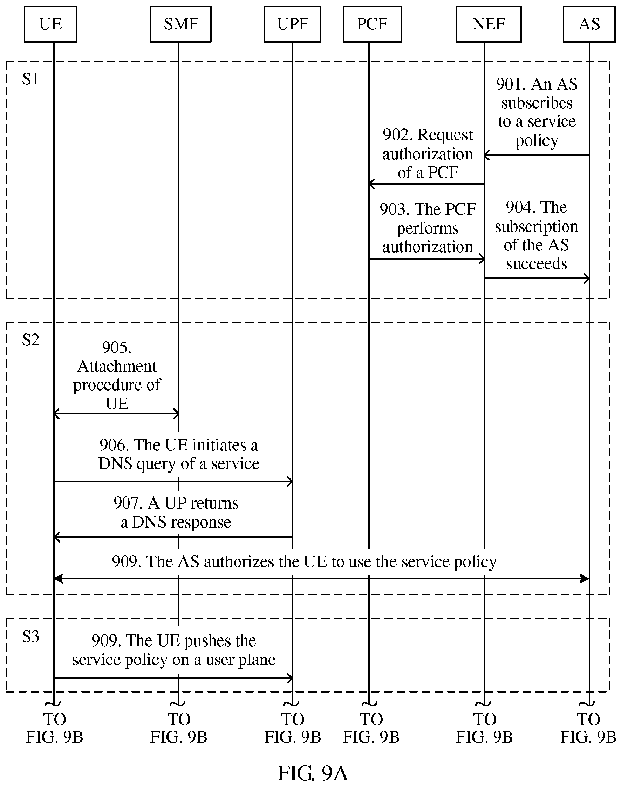

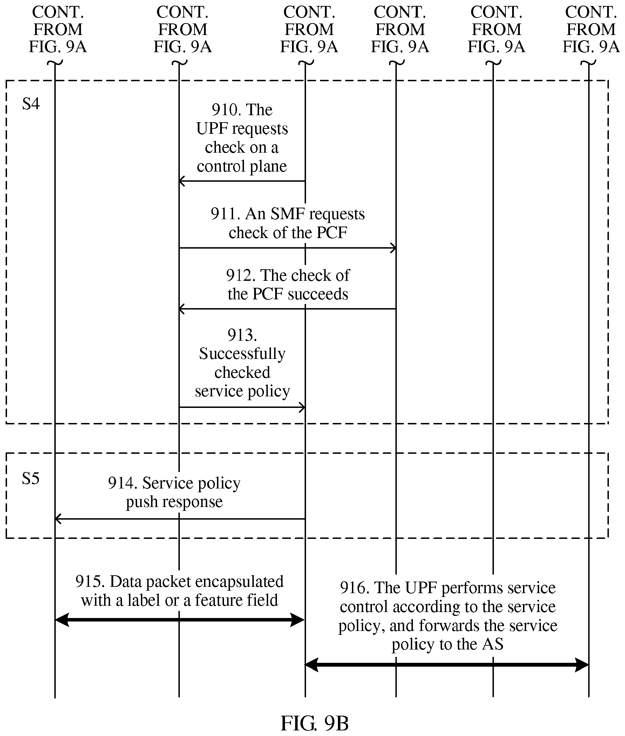

Based on the network architecture shown in FIG. 4, FIG. 9A and FIG. 9B are a schematic flowchart of a method in which when UE accesses, through a 5G network, an OTT service (such as Tencent Video or Sina Video) provided by an AS of an SP/a CP (such as Tencent or Sina), the UE pushes a service policy by using a user plane, and a UPF performs policy control on a service flow or a data packet between the UE and the AS according to the service policy pushed by the UE. To help understand the technical solution provided in this embodiment of the present invention, in FIG. 9A and FIG. 9B, steps of the method in FIG. 9A and FIG. 9B are mapped to the summary steps in FIG. 2 in a form of dashed lines S1 to S5.

901. The AS sends a service policy subscription request message to a NEF, where the message includes an identifier of the AS and a service policy requested by the AS, and optionally, may further include information such as an identifier or a service content description (such as a service type) of a service provided by the AS.

902. The NEF forwards the service policy subscription request message of the AS to a PCF.

903. The PCF receives the service policy subscription request message of the AS sent by the NEF, determines, in service policies to which the AS is to subscribe, based on information (for example, a level or a credit limit of an AS provider) such as a service type provided by the AS and an attribute of the AS, one or more service policies that can be used by the service provided the AS, and allocates a service policy identifier to a set of the service policies that can be used by the service provided by the AS. A coding rule of the service policy identifier is "core network operator coding + AS provider coding + AS service coding + authorized service policy coding". To be specific, both identifier information of the AS service and information indicating that the AS service is authorized with a service policy are reflected in service policy coding. The PCF sends a response message to the NEF. The response message carries the service policy that can be used by the AS and the service policy identifier.

904. The NEF sends the service policy that the PCF authorizes the AS to use and the corresponding service policy identifier to the AS. For example, a Tencent Video AS subscribes to a charging policy with a core network. The charging policy is a charging policy of unified payment of Tencent. In other words, Tencent pays all traffic costs of a service flow generated when the UE subsequently accesses the Tencent Video AS. For another example, Tencent video subscribes to two different types of QoS policies: a VIP user QoS policy and a common user QoS policy. The VIP user QoS policy is a high-rate and high-bandwidth QoS policy, and the common user QoS policy is a basic bandwidth-guaranteed QoS policy.

905. The UE initiates an attach procedure to a 5G core network through a 5G access network. The UE completes the attach procedure after a procedure such as authentication of the 5G core network succeeds. The 5G core network creates a default bearer for the UE. The UE may access an external network or server through the 5G access network and the 5G core network.

906. Before accessing the AS, the UE first performs a DNS query based on a domain name (for example, https://v.qq.com/) of the AS to obtain an address of the AS. The UE sends a DNS query request message to a DNS server on a user plane.

907. When the UPF serves as the DNS server, the UPF constructs a DNS query response message, and sends the DNS query response message to the UE, where address information included in the DNS query response message is address information of the UPF. When the UPF is not the DNS server, the UPF intercepts the DNS query request sent by the UE, constructs a DNS query response message, and sends the DNS query response message to the UE. Address information included in the DNS query response message is address information of the UPF. Then, the UPF queries the DNS server to obtain real address information of the AS. Alternatively, the UPF intercepts a DNS query response message sent by the DNS server to the UE, and replaces, with address information of the UPF, address information of the AS included in the DNS query response message. Regardless of a specific manner in which the UPF returns an address of the UPF to the UE, the UPF is set to a proxy or a message forwarding proxy between the UE and the AS. Destination addresses of all service flows, data packets, or service flows subsequently sent by the UE to the AS are filled in with the address of the UPF. The UPF forwards the service flows, the data packets, or the service flows to the AS after processing the service flows, the data packets, or the service flows.

908. The UE initiates establishment of a TCP connection to the UPF, and the UPF serves as a proxy and establishes a TCP connection to the AS. A user initiates a login request to the AS by using the UE. After authentication performed by the AS on the user succeeds, the AS authorizes the user to use the service policy to which the AS subscribes. The AS sends, to the UE, the service policy identifier corresponding to the service policy to which the AS subscribes. For example, if the user is a VIP user of Tencent Video, the Tencent Video AS sends a service policy identifier corresponding to the charging policy of unified payment of Tencent to the UE, or sends a service policy identifier corresponding to the VIP user QoS policy to the UE, to authorize the user to freely access a Tencent video service or access a Tencent Video service through high-rate and high-bandwidth QoS service experience.

909. The UE sends a service policy update request to the core network on the user plane, and pushes, to the core network, the service policy that the AS allows the user to use, where the service policy update request message includes the service policy identifier. When encapsulating a message for pushing the service policy, the UE may use a message name or a specific message format obtained through negotiation with the core network, to indicate the UPF that the user plane data is a service policy push message. A message encapsulation format of the user plane data is not limited in this embodiment of the present invention.

910. The UPF receives service policy information pushed by the UE, sends, to an SMF, the service policy identifier pushed by the UE, and requests a control plane for check.

911. The SMF receives a service policy check request message sent by the UPF, and forwards the request message to the PCF for determining and check.

912. The PCF checks the service policy identifier pushed by the UE, and sends the service policy corresponding to the service policy identifier to the SMF if the PCF determines that the service policy identifier is a valid service policy identifier allocated by the PCF.

913. After receiving the service policy successfully checked by the PCF, the SMF allocates a label to the service policy, where the label is used to identify the corresponding service policy on the user plane. A format of the label may be a number, may be a character string including letters or numbers, or may be another form. This is not limited in this embodiment of the present invention. The SMF sends both the label and the service policy to the UPF.

914. The UPF sends a service policy push response message to the UE, where the message includes the label allocated by the SMF to the service policy.

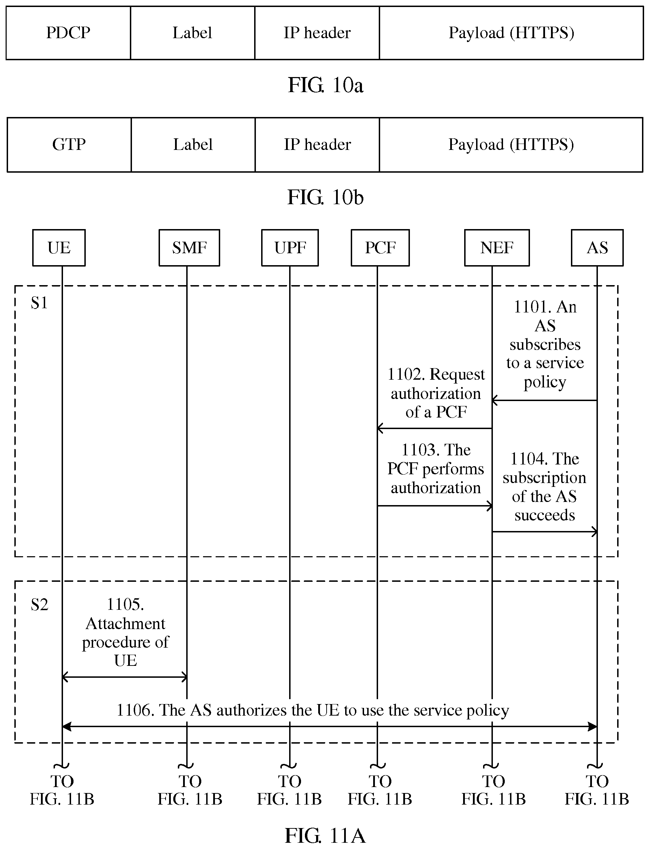

915. The UE sends service data to the AS, and encapsulates the label at an outer layer of a service data payload. As shown in FIG. 10a, a payload (payload) part encapsulated in an HTTPS format is a service flow or a data packet sent by the UE to the AS, and the UE encapsulates the label between a PDCP (Packet Data Convergence Protocol, packet data aggregation protocol) and the service flow or the data packet.

916. The UPF receives a GTP message packet transmitted through a wireless network, obtains the matched service policy based on the label if the UPF detects that the label is encapsulated in the GTP message, and performs corresponding charging processing on the service flow or the data packet of the UE according to the service policy. As shown in FIG. 10b, a GTP packet received by the UPF includes the label. Then, the UPF removes the label, and sends the service flow or the data packet in the payload part to the AS.

In the embodiment shown in FIG. 9A and FIG. 9B, the UE pushes the service policy to the core network by using the user plane, to avoid a case in which a large quantity of ASs push service flow features and corresponding service policies to the core network by using an AF, thereby simplifying a network topology relationship. This avoids performance pressure and a security risk of network interaction between the core network and the SP/CP, so that network security is improved. In addition, in the embodiment shown in FIG. 9A and FIG. 9B, the UE adds, to the service flow or the data packet header, the label that is allocated by the core network to the service policy and that is corresponding to the service policy. The label is separated from the service flow or the data packet. The core network does not need to detect or be aware of the service flow or the data packet. Even if the service flow or the data packet is an encrypted packet, the core network can obtain, based on the label in the service flow or the data packet header, the service policy corresponding to the current service flow of the UE, so that difficulty of performing service data detection by the core network is reduced, thereby improving service data detection accuracy.

In the solution in the embodiment shown in FIG. 9A and FIG. 9B, all actions of the UE in step 906 and a subsequent procedure may be triggered by an APP client installed on the UE. The APP client invokes another function module (as shown in FIG. 5 to FIG. 7) in the UE to implement the technical solution in this embodiment of the present invention by using the user plane service flow or data packet. A communications protocol stack does not change, and the service policy can be pushed only by upgrading the APP client on the UE. However, in the solution shown in FIG. 9A and FIG. 9B, the UPF needs to serve as the proxy between the UE and the AS to forward all service flows and service flows or data packets between the UE and the AS. This increases performance consumption of the UPF. In addition, it can be learned from step S4 (910 to 913) in FIG. 9A and FIG. 9B that service policy check is performed on the control plane of the core network, and the UPF executes the corresponding service policy according to an instruction of the control plane. Therefore, that the UE pushes the service policy by using the control plane is a more direct and convenient service policy push manner in terms of a procedure. However, in this manner, a control plane protocol (such as a NAS protocol) needs to be extended to support pushing of the service policy.

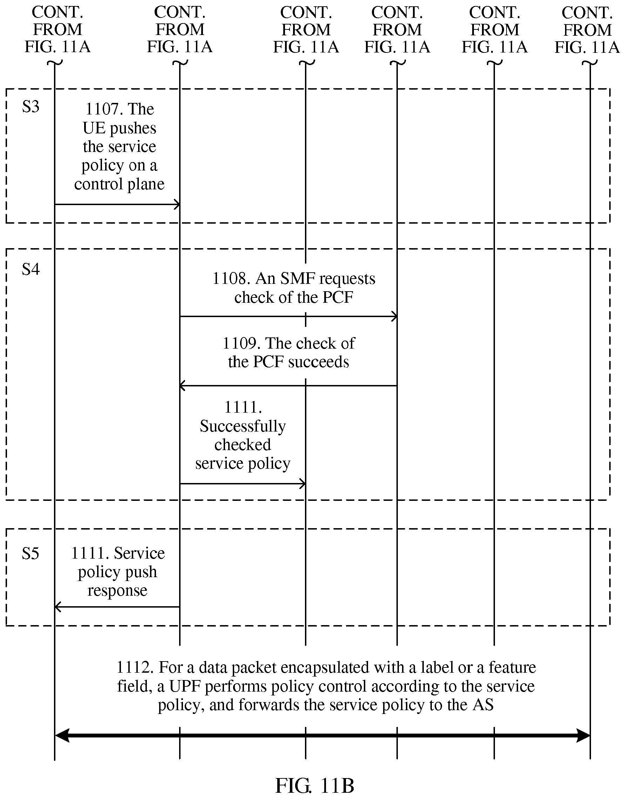

FIG. 11A and FIG. 11B are a flowchart of a method for pushing a service policy by UE by using a control plane. Step 1101 to step 1105 in FIG. 11A and FIG. 11B are the same as step 901 to step 905 in FIG. 9A and FIG. 9B, and details are not described again.

1106. Before accessing the AS service, the UE obtains an address of the AS through a DNS query. A difference from the solution in FIG. 9A and FIG. 9B lies in that the UPF does not intercept a DNS query request or response message, and the UE obtains real address information of the AS through the DNS query. The UE establishes a TCP connection to the AS by using the UPF. The UE initiates a service request to the AS, for example, an access request or a login request. After authentication performed by the AS on a user succeeds, the AS authorizes the user to use the service policy to which the AS subscribes, and the AS sends, to the UE, the service policy identifier corresponding to the service policy to which the AS subscribes.

1107. The UE constructs a control plane NAS message, and sends the control plane NAS message to an SMF, where the NAS message includes the service policy identifier. The NAS message sent by the UE to the SMF may further need to be forwarded by using another control plane function entity or network element such as an AMF. Details are not described herein.

1108 to 1110. The SMF sends, to the PCF for check, the service policy pushed by the UE. After the check succeeds, the SMF sends, to the UPF, the successfully checked service policy and a label allocated by the SMF to the service policy. For details, refer to the descriptions in step 911 to step 913 in FIG. 9A and FIG. 9B.

1111. The SMF sends a service policy push response message to the UE, where the message includes the label allocated by the SMF to the service policy. It should be noted that a sequence of step 1111 and step 1110 is not limited.

1112. The UE stores the label, and establishes a correspondence between the label, the service policy identifier, and the AS, for example, establishes a mapping relationship between the address of the AS and the label. The UE sends service data to the AS, and encapsulates the label corresponding to the AS at an outer layer of a service data payload. The UPF detects a service flow between the UE and the AS. For the service flow or a data packet including the label, the UPF obtains the service policy corresponding to the label, performs corresponding policy control on the service flow or the data packet, and sends the service data to the AS.

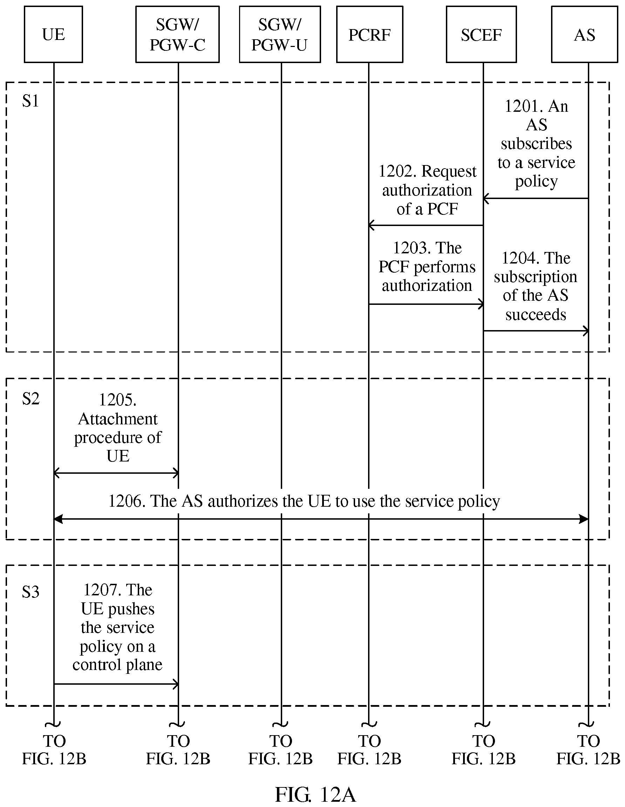

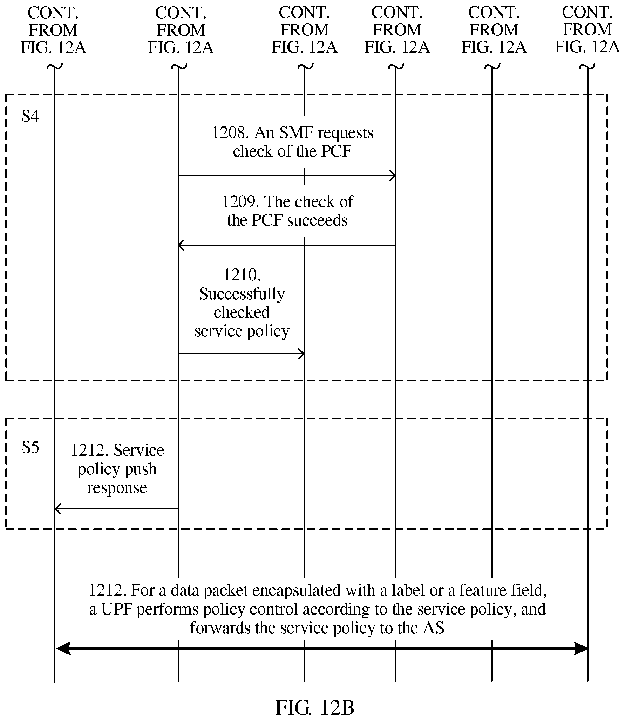

In FIG. 9A and FIG. 9B and FIG. 11A and FIG. 11B, the 5G core network is used as an example to describe the method procedure of pushing the service policy by using the user plane and the control plane The service policy push method provided in the embodiments of the present invention is also applicable to another type of network, such as a 4G core network. FIG. 12A and FIG. 12B are a method flowchart in which UE pushes a service policy to a 4G core network by using a control plane. In FIG. 12A and FIG. 12B, an SGW-C/a PGW-C, an SGW-U/a PGW-U, a PCRF, and an SCEF respectively implement functions of the SMF, the UPF, the PCF, and the NEF in FIG. 11A and FIG. 11B. A method procedure is similar, and details are not described herein again. It should be noted that, similar to that in FIG. 11A and FIG. 11B, a control plane message sent by the UE to the SGW-C/PGW-C needs to be forwarded by another network element in the 4G core network, for example, an MME. The another network element for forwarding the message is not shown in the figure. It should be further noted that in FIG. 12A and FIG. 12B, the SGW-C/PGW-C represents the SGW-C or the PGW-C, the SGW-U/PGW-U represents the SGW-U or the PGW-U, and functions of the SGW-C/PGW-C and the SGW-U/PGW-U may be implemented in independent entities or may be implemented in one entity. The procedure shown in FIG. 12A and FIG. 12B is further applicable to a scenario in which a control plane and a user plane are not separated in the 4G core network. In this scenario, the SGW-C/PGW-C and the SGW-U/PGW-U are implemented in one entity.

A person skilled in the art should easily be aware that, in combination with units and algorithm steps in the examples described in the embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described function for each particular application, but it should not be considered that the implementation goes beyond the scope of the present invention.

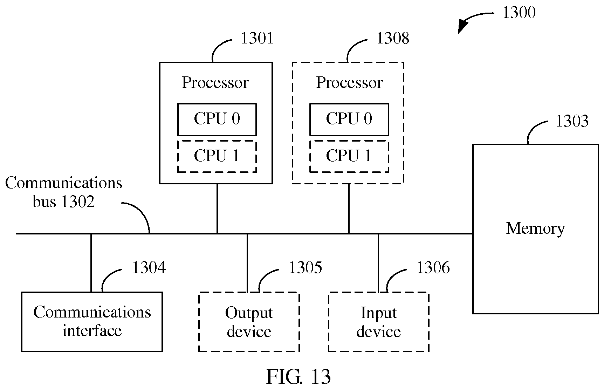

For example, as shown in FIG. 13, the UE, the AS, and the function entities such as the SMF, the PCF, the UPF, and the PGW in the core network in the embodiments of the present invention may be implemented by using a computer device (or a system) in FIG. 13.

FIG. 13 is a schematic diagram of a computer device according to an embodiment of the present invention. A computer device 1300 includes at least one processor 1301, a communications bus 1302, a memory 1303, and at least one communications interface 1304.

The processor 1301 may be a general-purpose central processing unit (central processing unit, CPU), a microprocessor, an application-specific integrated circuit (application-specific integrated circuit, ASIC), or one or more integrated circuits configured to control program execution in the solutions in the present invention.

The communications bus 1302 may include a channel for transmitting information between the foregoing components.

The communications interface 1304 is any apparatus such as a transceiver, and is configured to communicate with another device or a core network such as an Ethernet network, a radio access network (radio access network, RAN), or a wireless local area network (wireless local area networks, WLAN).

The memory 1303 may be a read-only memory (read-only memory, ROM) or another type of static storage device capable of storing static information and an instruction, a random access memory (random access memory, RAM) or another type of dynamic storage device capable of storing information and an instruction, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of an instruction or a data structure and capable of being accessed by a computer. However, the memory 1303 is not limited thereto. The memory may exist independently, and is connected to the processor through the bus. The memory may be alternatively integrated with the processor.

The memory 1303 is configured to store application program code for performing the solutions in the present invention, and execution of the application program code is controlled by the processor 1301. The processor 1301 is configured to execute the application program code stored in the memory 1303, to implement a function in the method in this patent.

During specific implementation, in an embodiment, the processor 1301 may include one or more CPUs such as a CPU 0 and a CPU 1 in FIG. 13.

During specific implementation, in an embodiment, the computer device 1300 may include a plurality of processors such as the processor 1301 and a processor 1308 in FIG. 13. Each of the processors may be a single-core (single-CPU) processor or a multi-core (multi-CPU) processor. The processor herein may be one or more devices, circuits, and/or processing cores configured to process data (such as a computer program instruction).

During specific implementation, in an embodiment, the computer device 1300 may further include an output device 1305 and an input device 1306. The output device 1305 communicates with the processor 1301, and may display information in a plurality of manners. For example, the output device 1305 may be a liquid crystal display (liquid crystal display, LCD), a light emitting diode (light emitting diode, LED) display device, a cathode-ray tube (cathode ray tube, CRT) display device, or a projector (projector). The input device 1306 communicates with the processor 1301, and may receive a user input in a plurality of manners. For example, the input device 1306 may be a mouse, a keyboard, a touchscreen device, or a sensing device.

The computer device 1300 may be a general-purpose computer device or a dedicated computer device. During specific implementation, the computer device 1300 may be a desktop computer, a portable computer, a network server, a personal digital assistant (personal digital assistant, PDA), a mobile phone, a tablet computer, a wireless terminal device, a communications device, an embedded device, or a device having a structure similar to that in FIG. 13. A type of the computer device 1300 is not limited in this embodiment of the present invention.

A person skilled in the art may learn that the UE 500, the UE 600, the UE 700, or the AS 800 may use the form shown in FIG. 13. For example, the application client module 601 in FIG. 6 or the service policy authorization module 802 in FIG. 8 may be implemented by invoking the code in the memory 1303 by the processor 1301 in FIG. 13. This is not limited in this embodiment of the present invention.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A communication system for implementing policy control, comprising a user equipment, a session management function entity, a user plane function entity, a policy control function entity, and a core network, wherein
the session management function entity is configured to: receive a service policy identifier sent by the user equipment, send the service policy identifier to the policy control function entity, receive a service policy that is sent by the policy control function entity and that is corresponding to the service policy identifier, and send the service policy to the user plane function entity;
the policy control function entity is configured to: receive the service policy identifier sent by the session management function entity, and send the service policy corresponding to the service policy identifier to the session management function entity; and
the user plane function entity is configured to: receive the service policy sent by the session management function entity, and perform, according to the service policy, policy control on a data packet sent by the user equipment,
wherein an application client module (501) of the user equipment is configured to interact with an application server to obtain the service policy identifier, wherein the data packet exchanged between the application client module (501) and the application server is sent or received by using a communications module (504) of the user equipment, and wherein the user plane function entity is set to a proxy or a message forwarding proxy between the user equipment and the application server,
in that the user equipment is configured to send a service policy update request to the core network on a user plane, and to push, to the core network, the service policy, wherein the service policy update request includes the service policy identifier, and
in that the user plane function entity is further configured to receive the service policy information pushed by the user equipment and to send, to the session management function entity, the service policy identifier pushed by the user equipment.

2. The communication system according to claim 1, wherein
the session management function entity is configured to receive a control plane message from the user plane function entity,
wherein the control plane message comprises the service policy identifier.

3. The communication system according to claim 1, wherein
the user plane function entity is further configured to receive user plane data from the user equipment, wherein the user plane data comprises the service policy identifier; and
the session management function entity is configured to receive a message from the user plane function entity, wherein the message comprises the service policy identifier from the user equipment.

4. The communication system according to claim 3, wherein the user plane function entity is further configured to send an address of the user plane function entity to the user equipment, so that the user equipment sends the user plane data to the address of the user plane function entity.

5. The communication system according to claim 1, wherein
the session management function entity is further configured to: allocate a label to the service policy corresponding to the service policy identifier, and send the label to the user equipment and the user plane function entity, so that the user equipment adds the label to to-be-sent user plane data, and the user plane function entity determines the corresponding service policy based on the label; and
the user plane function entity is further configured to: receive the label, and perform, according to the service policy corresponding to the label, policy control on the data packet that is sent by the user equipment and that comprises the label.

6. The communication system according to any one of claims 1 to 4, wherein
the session management function entity is further configured to: allocate a label to the service policy corresponding to the service policy identifier, and send the label to the user plane function entity; and
the user plane function entity is further configured to: receive the label, send the label to the user equipment, and perform, according to the service policy corresponding to the label, policy control on the data packet that is sent by the user equipment and that comprises the label.

## Patentansprüche

1. Kommunikationssystem zum Implementieren einer Richtliniensteuerung, das eine Benutzereinrichtung, eine Sitzungsverwaltungsfunktionseinheit, eine Benutzerebenenfunktionseinheit, eine Richtliniensteuerungsfunktionseinheit und ein Kernnetzwerk umfasst, wobei
die Sitzungsverwaltungsfunktionseinheit für Folgendes konfiguriert ist: Empfangen einer durch die Benutzereinrichtung gesendeten Dienstrichtlinienkennung, Senden der Dienstrichtlinienkennung an die Richtliniensteuerungsfunktionseinheit, Empfangen einer Dienstrichtlinie, die durch die Richtliniensteuerungsfunktionseinheit gesendet wird und die der Dienstrichtlinienkennung entspricht, und Senden der Dienstrichtlinie an die Benutzerebenenfunktionseinheit;
die Richtliniensteuerungsfunktionseinheit für Folgendes konfiguriert ist: Empfangen der durch die Sitzungsverwaltungsfunktionseinheit gesendeten Dienstrichtlinienkennung und Senden der Dienstrichtlinie, die der Dienstrichtlinienkennung entspricht, an die Sitzungsverwaltungsfunktionseinheit; und
die Benutzerebenenfunktionseinheit für Folgendes konfiguriert ist: Empfangen der durch die Sitzungsverwaltungsfunktionseinheit gesendeten Dienstrichtlinie und Durchführen, gemäß der Dienstrichtlinie, der Richtliniensteuerung auf einem durch die Benutzereinrichtung gesendeten Datenpaket,
wobei ein Anwendungsclientmodul (501) der Benutzereinrichtung konfiguriert ist, um mit einem Anwendungsserver zu interagieren, um die Dienstrichtlinienkennung zu erhalten, wobei das zwischen dem Anwendungsclientmodul (501) und dem Anwendungsserver ausgetauschte Datenpaket durch Verwenden eines Kommunikationsmoduls (504) der Benutzereinrichtung gesendet oder empfangen wird und wobei die Benutzerebenenfunktionseinheit als ein Proxy oder ein Nachrichtenweiterleitungsproxy zwischen der Benutzereinrichtung und dem Anwendungsserver gesetzt ist,
dadurch dass die Benutzereinrichtung konfiguriert ist, um eine Dienstrichtlinienaktualisierungsanforderung an das Kernnetzwerk auf einer Benutzerebene zu senden und um die Dienstrichtlinie an das Kernnetzwerk zu schieben, wobei die Dienstrichtlinienaktualisierungsanforderung die Dienstrichtlinienkennung beinhaltet, und
dadurch dass die Benutzerebenenfunktionseinheit ferner konfiguriert ist, um die durch die Benutzereinrichtung geschobenen Dienstrichtlinieninformationen zu empfangen und um die durch die Benutzereinrichtung geschobene Dienstrichtlinienkennung an die Sitzungsverwaltungsfunktionseinheit zu senden.

2. Kommunikationssystem nach Anspruch 1, wobei
die Sitzungsverwaltungsfunktionseinheit konfiguriert ist, um eine Steuerungsebenennachricht von der Benutzerebenenfunktionseinheit zu empfangen, wobei die Steuerungsebenennachricht die Dienstrichtlinienkennung umfasst.

3. Kommunikationssystem nach Anspruch 1, wobei
die Benutzerebenenfunktionseinheit ferner konfiguriert ist, um Benutzerebenendaten von der Benutzereinrichtung zu empfangen, wobei die Benutzerebenendaten die Dienstrichtlinienkennung umfassen; und
die Sitzungsverwaltungsfunktionseinheit konfiguriert ist, um eine Nachricht von der Benutzerebenenfunktionseinheit zu empfangen, wobei die Nachricht die Dienstrichtlinienkennung von der Benutzereinrichtung umfasst.

4. Kommunikationssystem nach Anspruch 3, wobei die Benutzerebenenfunktionseinheit ferner konfiguriert ist, um eine Adresse der Benutzerebenenfunktionseinheit an die Benutzereinrichtung zu senden, so dass die Benutzereinrichtung die Benutzerebenendaten an die Adresse der Benutzerebenenfunktionseinheit sendet.

5. Kommunikationssystem nach Anspruch 1, wobei
die Sitzungsverwaltungsfunktionseinheit ferner für Folgendes konfiguriert ist: Zuweisen eines Kennsatzes zu der Dienstrichtlinie, die der Dienstrichtlinienkennung entspricht, und Senden des Kennsatzes an die Benutzereinrichtung und die Benutzerebenenfunktionseinheit, so dass die Benutzereinrichtung den Kennsatz zu den zu sendenden Benutzerebenendaten hinzufügt, und die Benutzerebenenfunktionseinheit die entsprechende Dienstrichtlinie basierend auf dem Kennsatz bestimmt; und
die Benutzerebenenfunktionseinheit ferner für Folgendes konfiguriert ist: Empfangen des Kennsatzes und Durchführen, gemäß der Dienstrichtlinie, die dem Kennsatz entspricht, der Richtliniensteuerung auf dem Datenpaket, das durch die Benutzereinrichtung gesendet wird und das den Kennsatz umfasst.

6. Kommunikationssystem nach einem der Ansprüche 1 bis 4, wobei
die Sitzungsverwaltungsfunktionseinheit ferner für Folgendes konfiguriert ist: Zuweisen eines Kennsatzes zu der Dienstrichtlinie, die der Dienstrichtlinienkennung entspricht, und Senden des Kennsatzes an die Benutzerebenenfunktionseinheit; und
die Benutzerebenenfunktionseinheit ferner für Folgendes konfiguriert ist: Empfangen des Kennsatzes, Senden des Kennsatzes an die Benutzereinrichtung und Durchführen, gemäß der Dienstrichtlinie, die dem Kennsatz entspricht, der Richtliniensteuerung auf dem Datenpaket, das durch die Benutzereinrichtung gesendet wird und das den Kennsatz umfasst.

## Revendications

1. Système de communication destiné à mettre en œuvre une contrôle de politique, comprenant un équipement d'utilisateur, une entité de fonction de gestion de session, une entité de fonction de plan d'utilisateur, une entité de fonction de contrôle de politique et un réseau central, dans lequel
l'entité de fonction de gestion de session est configurée pour : recevoir un identificateur de politique de service envoyé par l'équipement utilisateur, envoyer l'identificateur de politique de service à l'entité de fonction de commande de politique, recevoir une politique de service qui est envoyée par l'entité de fonction de contrôle de politique et qui correspond à l'identificateur de politique de service et envoyer la politique de service à l'entité de fonction du plan d'utilisateur ;
l'entité de fonction de contrôle de politique est configurée pour : recevoir l'identificateur de politique de service envoyé par l'entité de fonction de gestion de session, et envoyer la politique de service correspondant à l'identificateur de politique de service à l'entité de fonction de gestion de session ; et
l'entité de fonction du plan d'utilisateur est configurée pour : recevoir la politique de service envoyée par l'entité de fonction de gestion de session, et effectuer, selon la politique de service, un contrôle de politique sur un paquet de données envoyé par l'équipement utilisateur,
dans lequel un module client d'application (501) de l'équipement utilisateur est configuré pour interagir avec un serveur d'application afin d'obtenir l'identificateur de politique de service, le paquet de données échangé entre le module client d'application (501) et le serveur d'application étant envoyé ou reçu en utilisant un module de communication (504) de l'équipement utilisateur, et dans lequel l'entité de fonction de plan d'utilisateur est réglée sur un proxy ou un proxy de transfert de message entre l'équipement utilisateur et le serveur d'application,
en ce que l'équipement utilisateur est configuré pour envoyer une demande de mise à jour de politique de service au réseau central sur un plan d'utilisateur, et pour pousser, vers le réseau central, la politique de service, la demande de mise à jour de politique de service comportant l'identificateur de politique de service, et
en ce que l'entité de fonction de plan d'utilisateur est en outre configurée pour recevoir les informations de politique de service poussées par l'équipement utilisateur et pour envoyer, à l'entité de fonction de gestion de session, l'identificateur de politique de service poussé par l'équipement utilisateur.

2. Système de communication selon la revendication 1, dans lequel
l'entité de fonction de gestion de session est configurée pour recevoir un message de plan de contrôle de l'entité de fonction de plan d'utilisateur, le message de plan de commande comprenant l'identificateur de politique de service.

3. Système de communication selon la revendication 1, dans lequel
l'entité de fonction de plan d'utilisateur est en outre configurée pour recevoir des données de plan d'utilisateur de l'équipement d'utilisateur, les données de plan d'utilisateur comprenant l'identificateur de politique de service ; et
l'entité de fonction de gestion de session est configurée pour recevoir un message de l'entité de fonction de plan d'utilisateur, le message comprenant l'identificateur de politique de service provenant de l'équipement d'utilisateur.

4. Système de communication selon la revendication 3, dans lequel l'entité de fonction de plan d'utilisateur est en outre configurée pour envoyer une adresse de l'entité de fonction de plan d'utilisateur à l'équipement utilisateur, de sorte que l'équipement utilisateur envoie les données de plan d'utilisateur à l'adresse de l'entité de fonction de plan d'utilisateur.

5. Système de communication selon la revendication 1, dans lequel
l'entité de fonction de gestion de session est en outre configurée pour : attribuer une étiquette à la politique de service correspondant à l'identificateur de politique de service, et envoyer l'étiquette à l'équipement utilisateur et à l'entité fonctionnelle de plan d'utilisateur, de sorte que l'équipement utilisateur ajoute l'étiquette à aux données de plan d'utilisateur envoyer, et l'entité de fonction de plan d'utilisateur détermine la politique de service correspondante sur la base de l'étiquette ; et
l'entité de fonction de plan d'utilisateur est en outre configurée pour : recevoir l'étiquette, et effectuer, selon la politique de service correspondant à l'étiquette, un contrôle de politique sur le paquet de données qui est envoyé par l'équipement utilisateur et qui comprend l'étiquette.

6. Système de communication selon l'une quelconque des revendications 1 à 4, dans lequel
l'entité de fonction de gestion de session est en outre configurée pour : attribuer une étiquette à la politique de service correspondant à l'identificateur de politique de service, et envoyer l'étiquette à l'entité de fonction de plan d'utilisateur ; et
l'entité de fonction de plan d'utilisateur est en outre configurée pour : recevoir l'étiquette, envoyer l'étiquette à l'équipement utilisateur et effectuer, selon la politique de service correspondant à l'étiquette, un contrôle de politique sur le paquet de données qui est envoyé par l'équipement utilisateur et qui comprend l'étiquette.
